(19) **Europäisches Patentamt European Patent Office Office européen des brevets**

(11) **EP 2 921 923 B1**

(12) **FASCICULE DE BREVET EUROPEEN**

(45) Date de publication et mention de la délivrance du brevet:
**11.07.2018 Bulletin 2018/28**

(51) Int Cl.:
*G05D 1/08* *(2006.01)* *B64G 1/00* *(2006.01)*
*G01C 21/24* *(2006.01)* *G01S 19/05* *(2010.01)*
*G01S 19/10* *(2010.01)* *G01S 19/14* *(2010.01)*

(21) Numéro de dépôt: **15156676.7**

(22) Date de dépôt: **26.02.2015**

(54) **Procédé de suivi d'une orbite de transfert ou d'une phase de mise en orbite d'un vehicule spatial, en particulier à propulsion électrique, et appareil pour la mise en oeuvre d'un tel procédé**

Verfahren zur Nachverfolgung einer Umlaufbahn oder einer Beförderungsphase in die Umlaufbahn eines Raumfahrzeugs, insbesondere mit elektrischem Antrieb, und Gerät für die Umsetzung dieses Verfahrens

Method for tracking a transfer orbit or a phase of placing a space vehicle in orbit, in particular a vehicle with electric drive, and apparatus for implementing such a method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2014 FR 1400508**

(43) Date de publication de la demande:
**23.09.2015 Bulletin 2015/39**

(73) Titulaire: **Thales**
**92400 Courbevoie (FR)**

(72) Inventeurs:
• **Calmettes, Thibaud**
**31037 Toulouse Cedex 1 (FR)**
• **Rozo-Quillere, Fabien**
**31037 Toulouse Cedex 1 (FR)**
• **Serant, Damien**
**31037 Toulouse Cedex 1 (FR)**

(74) Mandataire: **Priori, Enrico et al**
**Marks & Clerk France**
**Immeuble "Visium"**
**22, avenue Aristide Briand**
**94117 Arcueil Cedex (FR)**

(56) Documents cités:
**US-A1- 2011 254 734 US-B1- 7 246 775**
**US-B2- 6 859 170 US-B2- 6 882 908**

**Description**

L'invention porte sur un procédé de suivi d'orbite d'un véhicule spatial au moyen d'un système de navigation satellitaire (GNSS, de l'anglais « Global Navigation Satellite System ») de type GPS, Galileo ou GLONASS, ainsi que sur un appareil pour la mise en oeuvre d'un tel procédé. L'invention s'applique plus particulièrement au suivi d'une orbite de transfert - notamment vers une orbite géostationnaire - ou d'une phase de mise en orbite d'un véhicule spatial, notamment lorsque ce dernier utilise une propulsion électrique.

Les systèmes de navigation satellitaire ont été conçus pour permettre la localisation et le suivi de trajectoires d'utilisateurs au sol, ou tout au plus d'aéronefs évoluant à basse altitude. Cependant, il est également connu de les utiliser pour le suivi d'orbite de véhicules spatiaux, principalement en orbite basse (LEO, de l'anglais « Low Earth Orbit »), beaucoup plus rarement dans le cas d'orbites intermédiaires (MEO, de l'anglais « Medium Earth Orbit ») ou géostationnaires (GEO). Les documents US2011/0254734 A1 et US6,882,908 B2 décrivent de tels systèmes. Toutefois, ces systèmes ne sont pas utilisés à ce jour pour le suivi des phases de transfert ou de mise en orbite, car les contraintes d'utilisation sont fortes : le signal GNSS est généralement faible car ces orbites sont en dehors des lobes principaux des antennes émettrices des satellites GNSS (qui sont logiquement pointées vers la terre) ; il y a des périodes importantes de non disponibilité ; l'activation de la propulsion entraine des erreurs de localisation importantes et empêche d'avoir recours à l'hypothèse simplificatrice selon laquelle le véhicule suit une orbite képlérienne, etc. Ces contraintes sont encore plus importantes dans le cas des véhicules spatiaux à propulsion électrique (émission d'ions, par exemple), dans lesquels la poussée est continue sur toute la durée de la phase de transfert.

Pour ces raisons, le positionnement orbital en cours de transfert est réalisé grâce à des mesures de distance sur un canal de communication TMTC entre le véhicule spatial et des stations terrestres. Cette solution présente de nombreux inconvénients : besoin d'utiliser plusieurs stations au sol pour avoir une diversité géométrique suffisante, ce qui entraine un coût important ; imprécision de localisation ; délai entre les mesures qui induit des dérives fortes ; faible autonomie en cas de dégradation de la liaison de communication.

L'invention vise à remédier aux inconvénients précités de l'art antérieur. Plus particulièrement, elle vise à rendre possible un suivi par GNSS des orbites de transfert et des phases de mise en orbite des véhicules spatiaux, notamment utilisant une poussée continue et plus particulièrement une propulsion électrique.

Conformément à l'invention, un tel but est atteint grâce à un couplage serré entre un traitement GNSS et un modèle d'estimation d'un vecteur d'état du véhicule spatial prenant en compte la propulsion de ce dernier.

Ainsi, un objet de l'invention est un procédé de suivi d'une orbite de transfert ou d'une phase de mise en orbite d'un véhicule spatial comportant les étapes suivantes :

a) poursuivre au moins un signal GNSS et l'utiliser pour déterminer au moins une pseudo-distance entre ledit véhicule spatial et un ou plusieurs satellites GNSS émettant ledit ou chaque dit signal ;
b) utiliser un modèle d'estimation pour estimer conjointement un ensemble de paramètres d'état dudit véhicule spatial comprenant une pluralité de paramètres de position, une pluralité de paramètres de vitesse, au moins un paramètre d'horloge, et au moins un paramètre d'erreur de poussée caractérisant un écart entre une force de poussée réelle dudit véhicule spatial et une force de poussée nominale, en prenant ladite ou lesdites pseudo-distances en tant que donnée d'entrée dudit modèle d'estimation, ladite poussée étant une poussée continue de type électrique.

Selon des modes de réalisation particuliers d'un tel procédé :

- Ladite étape a) peut comprendre la récupération par assistance depuis le sol du message de navigation du satellite GNSS ou de chaque message de navigation de chaque satellite GNSS.
- Ladite étape a) peut comprendre la poursuite d'au moins un signal GNSS pilote, ne transportant pas de message de navigation, ladite poursuite étant réalisée par corrélation cohérente dudit ou de chaque dit signal GNSS pilote sur une durée supérieure à celle d'un symbole.
- En variante, ladite étape a) peut comprendre une opération d'effacement dudit ou de chaque dit message de navigation récupéré par assistance depuis le sol pour permettre ladite corrélation cohérente.
- Ledit ensemble de paramètres d'état peut comprendre au moins un premier paramètre d'erreur de poussée caractérisant un écart entre une amplitude de ladite force de poussée réelle et de ladite force de poussée nominale, et un deuxième paramètre d'erreur de poussée caractérisant un écart entre une direction de ladite force de poussée réelle et de ladite force de poussée nominale.
- Plus particulièrement, ledit ensemble de paramètres d'état peut comprendre au moins deux paramètres d'erreur de poussé caractérisant à la fois ledit écart entre une direction de ladite force de poussée réelle et de ladite force de poussée nominale, et une erreur d'estimation de l'attitude dudit véhicule spatial.
- Plus particulièrement encore, le procédé peut comporter également l'étape suivante :

c) appliquer, pendant une durée déterminée, une poussée nominalement dirigée selon une direction reliant ledit véhicule spatial à un satellite GNSS émettant un signal GNSS acquis lors de ladite étape a) ;

moyennant quoi l'application dudit modèle d'estimation permet une amélioration de l'estimation desdits ou d'au moins un desdits paramètres d'erreur de poussée.

- Ledit ensemble de paramètres d'état peut comprendre également au moins un paramètre d'erreur d'horloge, caractérisant un décalage ou une dérive d'une horloge d'un récepteur GNSS embarqué sur ledit véhicule spatial et utilisé pour mettre en oeuvre ladite étape a).
- Ledit modèle d'estimation peut être un filtre de Kalman ou un filtre de Kalman étendu caractérisé par une matrice ou fonction de transition dépendant du temps et de la position dudit véhicule spatial de façon à prendre en compte à la fois des forces gravitationnelles agissant sur ledit véhicule spatial et ladite force de poussée.
- Le procédé peut comporter également l'étape suivante :

d) utiliser des pseudo-distances mesurées dans le passé, ainsi que les estimations correspondantes desdits paramètres d'état, pour actualiser une matrice de covariance dudit modèle d'estimation.

- Le procédé peut comporter également l'étape suivante :

e) utiliser ledit ou au moins un dit signal GNSS acquis, une connaissance des éphémérides du satellite GNSS l'ayant émis et la position du véhicule spatial estimée au moyen dudit modèle d'estimation pour estimer un diagramme de rayonnement d'une antenne émettrice dudit satellite GNSS.

- Le procédé peut comporter également l'étape suivante :

f) utiliser ladite ou au moins une dite estimation d'un diagramme de rayonnement lors de la mise en oeuvre de ladite étape a).

- Le procédé peut comporter également l'étape suivante :

g) utiliser la connaissance dudit modèle d'estimation et desdits paramètres d'état pour déterminer des corrections futures de l'orbite et/ou de la poussée dudit véhicule spatial.

Un autre objet de l'invention est un appareil pour la mise en oeuvre d'un tel procédé comprenant :

- un récepteur GNSS configuré pour poursuivre au moins un signal GNSS ;
- un dispositif de traitement des données recevant en entrée un signal GNSS poursuivi par ledit récepteur ;

ledit dispositif de traitement étant configuré ou programmé pour :

- utiliser ledit ou chaque dit signal GNSS acquis pour déterminer au moins une pseudo-distance entre ledit récepteur et un ou plusieurs satellites GNSS émettant ledit ou chaque dit signal ;
- appliquer un modèle d'estimation pour estimer conjointement un ensemble de paramètres d'état comprenant une pluralité de paramètres de position, une pluralité de paramètres de vitesse, au moins un paramètre d'horloge, et au moins un paramètre d'erreur de poussée caractérisant un écart entre une force de poussée continue de type électrique réelle dudit véhicule spatial et une force de poussée continue nominale, en prenant ladite ou lesdites pseudo-distances en tant que donnée d'entrée dudit modèle d'estimation.

D'autres caractéristiques, détails et avantages de l'invention ressortiront à la lecture de la description faite en référence aux dessins annexés donnés à titre d'exemple, dans lesquelles :

- la figure 1 montre un véhicule spatial dont une orbite de transfert est suivie par un procédé selon l'invention ainsi qu'un satellite GNSS utilisé pour la mise en oeuvre de ce procédé ;
- la figure 2 illustre la relation existante entre un repère orbital local et un repère satellite ;
- la figure 3 illustre la notion d'erreur d'attitude ;
- la figure 4 est un schéma d'un procédé selon un mode de réalisation de l'invention ; et
- la figure 5 est un diagramme fonctionnel d'un appareil selon un mode de réalisation de l'invention.

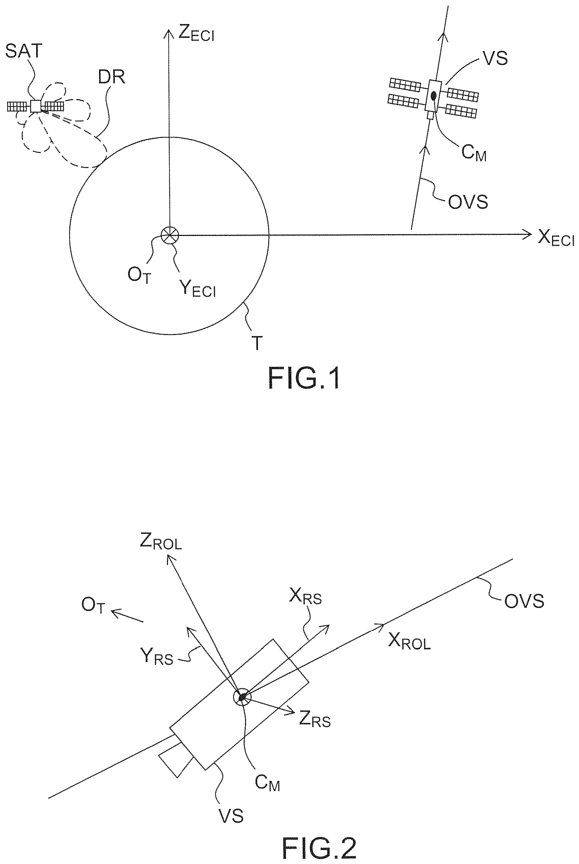

La figure 1 illustre une configuration dans laquelle la présente invention peut être mise en oeuvre avantageusement. Sur cette figure la référence T correspond à la Terre et $O_T$ à son centre servant d'origine au référentiel ECI (« Earth-Centered Inertial », c'est-à-dire « Inertiel Centré sur la Terre »), dont les axes, mutuellement orthogonaux, sont $X_{ECI}$, $Y_{ECI}$ et $Z_{ECI}$. Un satellite SAT en orbite basse, appartenant à une constellation GNSS, émet un signal de positionnement au moyen d'une antenne présentant un diagramme de rayonnement DR dont le lobe principal est dirigé vers la terre. Le véhicule spatial VS se déplace sur une orbite de transfert OVS à une altitude supérieure à celle du satellite SAT. L'orbite OVS n'est pas képlérienne, car la propulsion - par exemple électrique - du véhicule spatial est activée ; en outre, le signal de navigation est reçu avec un faible rapport signal sur bruit car seul un lobe secondaire du diagramme de rayonnement DR peut être capté par une antenne réceptrice du véhicule spatial VS. La figure illustre un seul satellite GNSS SAT, mais il faut comprendre qu'en général plusieurs d'entre eux peuvent être en conditions de visibilité depuis le véhicule spatial VS.

La figure 2 représente schématiquement le véhicule spatial VS et deux référentiels centrés sur son centre de masse $c_m$, qui se déplace suivant la trajectoire OVS. Les axes mutuellement orthogonaux $X_{ROL}$, $Y_{ROL}$ et $Z_{ROL}$ forment le « repère orbital » ; conventionnellement on choisit $X_{ROL}$ orienté selon l'axe vitesse et $Z_{ROL}$ tel que le centre de la terre $O_T$ soit dans le plan $(X_{ROL}, c_M, Z_{ROL})$. Les axes mutuellement orthogonaux $X_{RS}$, $Y_{RS}$ et $Z_{RS}$ forment le « repère satellite », lié physiquement au véhicule spatial VS. Conventionnellement on choisit $X_{RS}$ opposé à l'axe de la tuyère, de telle sorte que la poussée soit faite dans une direction $X_{RS}$.

L'attitude du véhicule spatial est la rotation entre les deux repères $(X_{ROL}, Y_{ROL}, Z_{ROL})$ et $(X_{RS}, Y_{RS}, Z_{RS})$. Classiquement, elle peut être définie par trois angles d'Euler ou par des quaternions.

L'attitude est généralement estimée par des méthodes telles que l'utilisation de senseurs stellaires ou la prise en compte de l'historique des rotations des roues de contrôle d'attitude. Cette estimation présente inévitablement une erreur (« erreur d'attitude »), dont la prise en compte constitue un aspect important de la présente invention. L'erreur d'attitude peut être définie par l'erreur entre le « vrai » axe $X_{RS}$ et l'axe « estimé » $\hat{X}_{RS}$. Cette erreur est une rotation, définie en général par trois angles ; toutefois, comme elle est généralement petite, elle peut être décrite par deux angles seulement (décalage en élévation de, décalage en azimut da) :

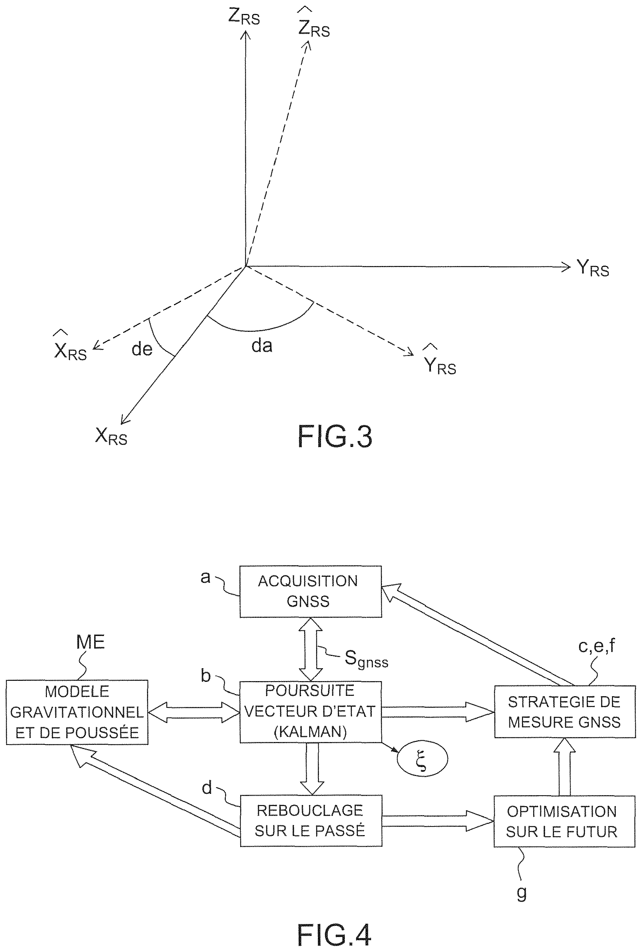

. La relation entre le vrai repère satellite $(X_{RS}, Y_{RS}, Z_{RS})$ et le repère satellite estimé $(\hat{X}_{RS}, \hat{Y}_{RS}, \hat{Z}_{RS})$ est illustré sur la figure 3.

La figure 4 illustre schématiquement un procédé de suivi d'orbite, qui sera décrit en détail ci-après.

La première étape (a) d'un tel procédé est l'acquisition d'un ou plusieurs signaux GNSS et leur utilisation pour déterminer une ou plusieurs pseudo-distances.

Les signaux GNSS sont des signaux à étalement de spectre de type CDMA (« Code Division Multiple Access » c'est-à-dire « Accès Multiple à Répartition de Code »), constitués d'un contenu binaire utile (message de navigation) multiplié par un code d'étalement. Le code d'étalement est répété avec une périodicité égale à la durée d'un symbole, avec un signe positif ou négatif selon la valeur dudit symbole. Dans le cadre de l'utilisation du GNSS pour la navigation en orbites hautes on travaille à faible rapport signal à bruit et il devient donc particulièrement intéressant de considérer, parmi les signaux, uniquement les voies pilotes, c'est-à-dire les voies pour lesquelles le contenu binaire utile est fixe (symboles identiquement égaux à zéro ou à un). Ainsi, on peut intégrer le signal de manière cohérente sur une longueur plus longue que la durée du symbole utile. A l'exception de la voie L1 sur GPS, l'ensemble des signaux GPS et Galileo (ainsi que GLONASS et Compass) sont toujours constitués d'une voie pilote et d'une voie données modulées, de sorte que cette contrainte d'utilisation de pilote n'entraîne pas de limitation de fréquence (sauf en ce qui concerne la voie L1 du GPS). En contrepartie, l'information transportée par le signal de navigation - et notamment les éphémérides à long terme des satellites GNSS - doit être récupérée par un autre moyen, typiquement, depuis une station au sol. En variante, il est possible d'utiliser le signal de navigation ainsi récupéré pour « retirer » les symboles binaires d'une voie pilote, et transformer cette dernière en voie pilote (« data wipe-off »).

L'utilisation d'une voie pilote seule permet d'effectuer une mesure de pseudo-distance ambiguë à la période du code. En effet, tous les symboles étant les mêmes, on peut dater le début d'un symbole mais on ne peut pas dire a priori de quel symbole il s'agit. Selon la bande utilisée, cette ambiguïté se situe entre 1ms (300km en distance) et 4ms (1200km). De telles distances sont assez importantes pour permettre une levée d'ambiguïté rapide dans des applications sol, mais elles peuvent être assez facilement atteintes dans le cadre d'une propagation orbitale, compte-tenu de la possibilité de rencontrer de longues périodes (plusieurs heures) sans possibilité de mesure.

Conformément à l'invention, cette ambiguïté est résolue grâce à l'utilisation d'un modèle d'estimation de la poussée du véhicule spatial. Ce modèle peut avantageusement être intégré à un modèle d'estimation d'un vecteur d'état incluant, outre des paramètres caractérisant la poussée, la position et la vitesse du véhicule spatial.

En outre, l'intégration de la poussée dans le vecteur d'état estimé permet d'améliorer la connaissance continue de la position du récepteur, y compris dans les phases de propagation pure où les satellites GNSS ne sont pas ou peu visibles. Il est alors pertinent de considérer une intégration dite « serrée » des mesures GNSS dans le traitement. En effet, de la cadre d'un fonctionnement « lâche », les mesures de pseudo-distance du traitement GNSS sont réalisées de manière indépendante, et transmises ensuite à la fonction de navigation qui se charge de les prendre en compte dans le suivi de trajectoire. Dans le cadre d'un fonctionnement « serré », la fonction de navigation fournit au traitement GNSS la position estimée du récepteur. En combinant cette position estimée du récepteur avec la position estimée des satellites GNSS, le traitement GNSS peut anticiper les fréquences et synchronisation de réceptions des signaux GNSS, ce qui facilite très largement son fonctionnement et qui améliore en particulier sa capacité à fonctionner à faible rapport signal à bruit.

Avantageusement, dans un mode de réalisation de l'invention le vecteur d'état (référence $\xi$ sur la figure 4) est estimé par filtrage de Kalman (bloc b) à l'aide d'un modèle d'estimation ME tenant compte à la fois des forces gravitationnelles et de la poussée.

Pour mémoire, le filtrage de Kalman comprend une première phase de prédiction, dans laquelle le vecteur d'état au temps $t_k$ et sa matrice de covariance sont estimés à partir des seules données disponibles au temps $t_{k-1}$, suivie d'une phase de correction exploitant la mesure d'un observable au temps $t_k$. Les équations du filtre de Kalman sont données par :

- Phase de prédiction :

$$\hat{\xi}_{k|k-1} = F_{k-1}\hat{\xi}_{k-1|k-1} + B_{k-1}u_{k-1}$$

$$P_{k|k-1} = F_{k-1}P_{k-1|k-1}F_{k-1}^T + Q_k$$

- Phase de correction :

$$\tilde{y}_k = z_k + H_k\hat{\xi}_{k|k-1}$$

$$S_k = H_kP_{k|k-1}H_k^T + R_k$$

$$K_k = P_{k|k-1}H_k^TS_k^{-1}$$

$$\hat{\xi}_{k|k} = \hat{\xi}_{k|k-1} + K_k\tilde{y}_k$$

$$P_{k|k} = (I - K_kH_k)P_{k|k-1}$$

où :

- L'exposant « $^T$ » indique l'opération de transposition, l'exposant « $^{-1}$ » l'inversion d'une matrice ;

- Les symboles en gras dénotent des matrices ;

- $\hat{\xi}_{k|k-1}$ est l'estimation d'état a priori ;

- $P_{k|k-1}$ est la covariance d'estimation a priori ;

- $F_{k-1}$ (resp $F_k$) est la matrice de transition d'état au temps $t_{k-1}$ (resp. $t_k$) ;

- $B_{k-1}$ est la matrice de commande ;

- $u_{k-1}$ est un vecteur de commande ;

- $Z_k$ est le résultat de mesure de l'observable au temps $t_k$ ;

- $\tilde{y}_k$ est l'innovation ;

- $\boldsymbol{S}_k$ est la matrice de covariance de l'innovation ;

- $\boldsymbol{H}_k$ est la matrice de mesure ;

- $\boldsymbol{K}_k$ est le gain de Kalman optimal ;

- $\hat{\xi}_{k|k}$ et $\boldsymbol{P}_{k|k}$ sont, respectivement, l'estimation d'état et la covariance d'estimation *a posteriori* ;

- $\boldsymbol{Q}_k$ et $\boldsymbol{R}_k$ sont des bruits.

Dans la suite on considérera que le vecteur de commande $u$ est identiquement nul.

Le vecteur d'état $\xi$ comprend au moins des paramètres de position et de vitesse, ainsi qu'un ou plusieurs paramètres d'erreur de poussée, caractérisant un écart entre une force de poussée réelle agissant sur le véhicule spatial et une force de poussée nominale. Avantageusement, il peut comprendre également un ou plusieurs paramètres caractérisant une erreur de l'horloge embarquée dans le récepteur GNSS. A titre d'exemple spécifique, non limitatif, on peut avoir :

$$\xi=[x \; ; \; y \; ; \; z \; ; \; v_x \; ; \; v_y \; ; \; v_z \; ; \; h_0 \; ; \; h_1 \; ; \; G_0 \; ; \; de \; ; \; da]^{\mathsf{T}}$$

où :

- x, y, z sont les coordonnées du centre de masse du véhicule spatial dans un référentiel ECI (voir la figure 1), et $v_x$, $v_y$, $v_z$ les composantes correspondantes de la vitesse ;
- $h_0$ et $h_1$ sont, respectivement, un biais et une dérive de l'horloge du récepteur ;
- $G_0$ est une erreur d'amplitude de la poussée ;
- de et da, définis plus haut en référence à la figure 3, des paramètres qui caractérisent l'erreur d'attitude, et donc l'erreur angulaire de la poussée, en considérant que cette dernière présente une orientation fixe par rapport à la caisse du véhicule spatial.

On comprend aisément que d'autres représentations du vecteur d'état sont possibles. Par exemple, la position peut être définie par une représentation elliptique képlérienne ; la dérive de l'horloge peut parfois être négligée ; on peut introduire une dérive d'erreur d'amplitude de la poussée, $G_1$ ; les paramètres angulaires de et da peuvent être remplacés par trois paramètres représentant une erreur de roulis, de tangage et de lacet.

A partir du vecteur d'état $\xi_{k-1}$ à une date $t_{k-1}$, on calcule par propagation du modèle de forces le vecteur d'état $\xi_{k|k-1}$ à la date $t_k = t_{k-1} + \Delta t$, en prenant par exemple $\Delta t = 30$ secondes. Cela veut dire dans la pratique que connaissant la position (nécessaire pour l'évaluation des forces de gravité - attraction terrestre, lunaire et solaire), la poussée et l'axe de la poussée (nécessaire pour l'évaluation de la force de poussée), on connaît l'accélération exercée sur le satellite à la $t_{k-1}$ et on peut en déduire la variation de tous les paramètres :

- Position(k|k-1) = Position(k) + Vitesse(k) · $\Delta t$
- Vitesse(k/k-1) = Vitesse(K) + Accélération(k) · $\Delta t$
- $h_0$(k|k-1) = $h_0$ (k)
- $h_1$(k|k-1) = $h_1$(k)
- $G_0$(k|k-1) = $G_0$(k)
- de(k|k-1) = de(k)
- da(k|k-1) = da(k)

On peut donc construire la matrice de variation ($\boldsymbol{F_{k-1}}$ dans les formules plus haut), sous la forme :

$$F_{k-1}=$$

| | | | | | | | | | | |
|---|---|---|---|---|---|---|---|---|---|---|
| 1 | 0 | 0 | $\Delta t$ | 0 | 0 | 0 | 0 | 0 | 0 | 0 |
| 0 | 1 | 0 | 0 | $\Delta t$ | 0 | 0 | 0 | 0 | 0 | 0 |
| 0 | 0 | 1 | 0 | 0 | $\Delta t$ | 0 | 0 | 0 | 0 | 0 |
| $A_1$ | $A_2$ | $A_3$ | 1 | 0 | 0 | 0 | 0 | $A_4$ | $A_5$ | $A_6$ |
| $A_7$ | $A_8$ | $A_9$ | 0 | 1 | 0 | 0 | 0 | $A_{10}$ | $A_{11}$ | $A_{12}$ |
| $A_{13}$ | $A_{14}$ | $A_{15}$ | 0 | 0 | 1 | 0 | 0 | $A_{16}$ | $A_{17}$ | $A_{18}$ |
| 0 | 0 | 0 | 0 | 0 | 0 | 1 | 0 | 0 | 0 | 0 |
| 0 | 0 | 0 | 0 | 0 | 0 | 0 | 1 | 0 | 0 | 0 |
| 0 | 0 | 0 | 0 | 0 | 0 | 0 | 0 | 1 | 0 | 0 |
| 0 | 0 | 0 | 0 | 0 | 0 | 0 | 0 | 0 | 1 | 0 |
| 0 | 0 | 0 | 0 | 0 | 0 | 0 | 0 | 0 | 0 | 1 |

Les valeurs de $A_1$ à $A_{18}$ valent $\Delta t$ multiplié par les dérivées partielles de l'accélération par rapport aux éléments de position et aux éléments de poussée. Par exemple

$$A_1 = \Delta t \left. \frac{\partial \ddot{x}}{\partial x} \right|_{t_k}$$

où $\ddot{x}$ est la composante de l'accélération selon l'axe x.

Dans la pratique, si l'intervalle $\Delta t$ est trop grand pour considérer la position, la vitesse et l'accélération comme constantes, on peut utiliser des méthodes d'intégration de type Runge-Kutta.

On remarquera que les équations du mouvement sont non-linéaires, car les forces gravitationnelles dépendent de la position. Toutefois, dans le modèle ci-dessus les équations sont linéarisées et la non-linéarité se traduit par le fait que la matrice **F** n'est pas constante mais change d'un pas de propagation à l'autre. De même, l'effet de la poussée est intégré à la matrice **F,** ce qui permet de ne pas utiliser un vecteur de commande *u*.

Il est intéressant de noter que l'attitude du satellite intervient dans la matrice de transition d'état par le biais de la poussée. Cela veut dire qu'une variation d'attitude se traduit par une variation de position. La position étant observable par la mesure de pseudo-distance (voir ci-dessous), l'attitude est donc observable. Le fait que l'attitude ait une influence sur la position est directement traduit par le fait que les éléments $A_5$, $A_6$, $A_{11}$, $A_{12}$, $A_{17}$ et $A_{18}$ dans la matrice **F** sont non-nulles.

Grâce à l'intégration des paramètres de et da dans le vecteur d'état on peut donc estimer continûment l'erreur d'estimation sur $\hat{X}_{RS}$ et $\hat{Y}_{RS}$ et donc contribuer à l'estimation d'attitude du satellite.

Dans le modèle du filtre de Kalman, on peut de plus prendre en compte l'erreur de propagation. Les valeurs d'erreur estimée doivent être introduites dans la matrice $\mathbf{Q_k}$ des formules ci-dessus. Par exemple, on peut considérer que le modèle d'accélération présente une erreur (écart-type) de $1.10^{-7}$ $m/s^2$ dans chaque direction, par exemple parce que, dans un souci de simplicité, on a ignoré l'effet de l'attraction lunaire. Dans ce cas on va commettre sur la vitesse propagée une erreur de $1.10^{-7} \cdot \Delta t$ m/s = $3.10^{-6}$ m/s en prenant $\Delta t=30s$. Alors, en considérant qu'il n'y ait aucune autre erreur, on a :

$$Q_k = (3 \cdot 10^{-6})^2 \cdot$$

| 0 | 0 | 0 | 0 | 0 | 0 | 0 | 0 | 0 | 0 | 0 |
|---|---|---|---|---|---|---|---|---|---|---|
| 0 | 0 | 0 | 0 | 0 | 0 | 0 | 0 | 0 | 0 | 0 |
| 0 | 0 | 0 | 0 | 0 | 0 | 0 | 0 | 0 | 0 | 0 |
| 0 | 0 | 0 | 1 | 0 | 0 | 0 | 0 | 0 | 0 | 0 |
| 0 | 0 | 0 | 0 | 1 | 0 | 0 | 0 | 0 | 0 | 0 |
| 0 | 0 | 0 | 0 | 0 | 1 | 0 | 0 | 0 | 0 | 0 |
| 0 | 0 | 0 | 0 | 0 | 0 | 0 | 0 | 0 | 0 | 0 |
| 0 | 0 | 0 | 0 | 0 | 0 | 0 | 0 | 0 | 0 | 0 |
| 0 | 0 | 0 | 0 | 0 | 0 | 0 | 0 | 0 | 0 | 0 |
| 0 | 0 | 0 | 0 | 0 | 0 | 0 | 0 | 0 | 0 | 0 |
| 0 | 0 | 0 | 0 | 0 | 0 | 0 | 0 | 0 | 0 | 0 |

le carré étant dû au fait que $Q_k$ est une matrice de variances et non d'écarts types.

Dans les équations de Kalman, une mesure $z_k$ est utilisée pour calculer l'innovation $\tilde{y}_k$ comme étant l'écart entre la mesure attendue, fonction de $\hat{\xi}_{k|k-1}$, et la mesure réellement effectuée. Dans le cas du GNSS, la mesure concernée est une mesure de pseudo-distance. En considérant les coordonnées $(X_{SAT}, Y_{SAT}, Z_{SAT})$ du satellite GNSS au moment de l'émission du signal à la date $t_E$ (vraie date), et $t_R$ étant la date de réception déterminée par le récepteur, la pseudo-distance PD est donnée par :

$$PD = t_R - t_E = \frac{\sqrt{(x - x_{SAT})^2 + (y - y_{SAT})^2 + (z - z_{SAT})^2}}{c} + h$$

h étant l'erreur de l'horloge embarquée ($h = h_0 + h_1 \cdot t_k$ en reprenant le vecteur d'état défini précédemment) et c la vitesse de la lumière. L'innovation $\tilde{y}_k$ est la différence entre la pseudo-distance effectivement mesurée celle attendue à la date $t_k$ :

$$\tilde{y}_k = PD - \left[ \frac{\sqrt{\left(x_{k|k-1} - x_{SAT}\right)^2 + \left(y_{k|k-1} - y_{SAT}\right)^2 + \left(z_{k|k-1} - z_{SAT}\right)^2}}{c} + h_{k|k-1} \right]$$

Seuls les paramètres qui ont un impact sur la pseudo-distance sont observables directement, à savoir l'erreur d'horloge et la position. Selon un aspect avantageux de l'invention, il est possible d'optimiser la trajectoire pour faire en sorte que la poussée ait une influence forte - bien qu'indirecte - sur la mesure de pseudo-distance.

Pour simplifier, on suppose que le satellite GNSS SAT est situé au centre de la Terre, $O_T$, et que le véhicule spatial VS est situé à une position $(0, 0, z)$ dans le référentiel ETI ; alors, la matrice $H_k$ (en fait, un vecteur ligne qui, multiplié à droite par $\hat{\xi}_{k|k-1}$ donne un scalaire) vaut :

$$H_k = [0, 0, 1/c, 0, 0, 0, 1, 0, 0, 0, 0]$$

En effet pseudo-distance varie en proportion de l'horloge et en 1/c par rapport à la direction z, les autres éléments n'ayant pas d'impact.

Une poussée selon l'axe $X_{ROL}$ a un impact sur la vitesse $v_x$ puis, à l'itération suffisante, sur la position x, mais cela n'a pas d'impact sur la mesure de pseudo-distance, car la direction $X_{ROL}$ est orthogonale à l'axe reliant le satellite GNSS au véhicule spatial (parallèle à $Z_{ROL}$). Par conséquent, pour réduire le résidu entre la mesure réelle et la mesure estimée, le filtre de Kalman va corriger prioritairement le paramètre d'erreur d'horloge et les estimations de z et de $v_z$, c'est-à-dire les éléments qui ont un impact sur la mesure, au détriment des autres éléments du vecteur d'état, notamment la poussée.

Si par contre on modifie l'attitude du véhicule spatial afin que la poussée soit temporairement orientée selon l'axe $Z_{ROL}$, alors la poussée a une forte influence sur la mesure de pseudo-distance, et le filtre de Kalman va corriger les estimations de z et de $v_z$, des erreurs de poussée (erreur angulaire exprimé par de et da et erreur d'amplitude $G_0$), outre que le paramètre d'erreur d'horloge.

Autrement dit, en choisissant l'axe de poussée, on améliore l'observabilité de l'estimation de poussée du vecteur d'état.

D'un point de vue mathématique, cela se traduit de la façon suivante :

- En l'absence d'apport de la mesure sur une variable, sa covariance (la ligne qui lui correspond dans la matrice $\mathbf{P}$) augmente plus vite lors de l'étape de propagation (qui la fait passer de $\mathbf{P}_{k-1}$ à $\mathbf{P}_{k|k-1}$) que ce qu'elle diminue lors de la correction de mesure (qui la fait passer de $\mathbf{P}_{k|k-1}$ à $\mathbf{P}_k$). Cela traduit une incertitude croissante pour le filtre sur cette valeur.
- Au contraire, si l'apport de la mesure est fort, on observe une forte diminution dans le passage de $\mathbf{P}_{k|k-1}$ à $\mathbf{P}_k$, en particulier supérieure à l'augmentation entre $\mathbf{P}_{k-1}$ à $\mathbf{P}_{k|k-1}$ ; donc, globalement, l'incertitude se réduit entre $t_{k-1}$ et $t_k$.

Le fait de choisir l'axe de poussée non seulement en fonction de la direction souhaitée vis-à-vis du transfert orbital, mais également en fonction de ce que cela permet comme observabilité, et cela notamment dans les cas où l'on verrait les lignes correspondant à la poussée augmenter fortement dans la matrice $\mathbf{P}$, est représenté schématiquement sur la figure 4 par le bloc « stratégie de mesure GNSS » (référence c).

Il est connu de la théorie du filtrage de Kalman que le vecteur d'état $\xi$ ne peut pas être trop complexe sous peine de rencontrer des problèmes d'inversibilité. Cela oblige à simplifier de manière excessive la modélisation du mouvement du véhicule spatial. Par exemple, l'erreur d'amplitude de poussée g est modélisée par un décalage, voire par un décalage et une dérive linéaire ; mais un modèle plus réaliste serait :

$$g(t) = g_0 + g_1 \cdot \sin(g_2 \cdot t + g_3)$$

impliquant quatre paramètres $g_0$, $g_1$, $g_2$ et $g_3$.

Pour surmonter cette difficulté on peut avoir recours à un « rebouclage sur le passé » (référence d sur la figure 4).

Par exemple, on considère le cas où le vecteur d'état comprend un seul paramètre $g(t) = G_0$ constant modélisant l'erreur d'amplitude de poussée alors que, comme montré ci-dessus, quatre paramètres seraient nécessaires. On a :

- $g(t_{k-1}) = g_0 + g_1 \cdot \sin(g_2 \cdot t_{k-1} + g_3)$
- $g(t_k) = g_0 + g_1 \cdot \sin(g_2 \cdot t_k + g_3)$

En posant $t_k = t_{k-1} + \Delta t$ :

- $g(t_k) = g_0 + g_1 \cdot \sin[g_2 \cdot (t_{k-1} + \Delta t) + g_3]$

ce qui après développement du sinus et simplification à l'ordre 1 et en considérant $g_2 \cdot \Delta t$ petit (autrement dit la période de variation sinusoïdale est beaucoup plus grande que $\Delta t$), soit $\cos(g_2 \cdot \Delta t) = 1$ et $\sin(_{92} \cdot \Delta t) = 0$, donne :

- $g(t_k) = g(t_{k-1}) + g_1 \cdot g_2 \cdot \Delta t \cdot \cos(g_2 \cdot \Delta t + g_3)$

Autrement dit :

- En ayant estimé correctement $G_0 = g(t_{k-1}) = g_0 + g_1 \cdot \sin(g_2 \cdot t_{k-1} + g_3)$ à la date $t_{k-1}$,
- Et en propageant par $g(t_k) = G_0$,
- On introduit une erreur de $\Delta G_0 = g_1 \cdot g_2 \cdot \Delta t \cdot \cos(g_2 \cdot t_{k-1} + g_3)$ sur la propagation.

Ainsi, si au lieu de travailler point après point avec un filtre de Kalman, on estime d'un seul coup, par exemple par une estimation aux moindres carrés sur la journée passée (24 heures), un vecteur d'état beaucoup plus complexe, intégrant quant à lui $g_0$, $g_1$, $g_2$, $g_3$ ainsi que les paramètres équivalents sur l'erreur d'attitude et d'horloge, cet estimateur aux moindres carrés ne présente pas de problème de convergence puisqu'on considère beaucoup plus de mesures que de paramètres. Si on en effectue une mesures toutes les $\Delta t=30s$, on dispose de $24 \cdot 3600/30 = 2880$ mesures pour, par exemple, 32 paramètres (11 paramètres définissant le vecteur d'état et des modèles harmoniques - introduisant chacun trois paramètres additionnels - pour l'erreur d'amplitude de poussée, l'erreur d'horloge, les deux composantes de l'erreur angulaire de la poussée, les trois composantes d'accélération).

Après cette estimation aux moindres carrés, on peut considérer que ces paramètres sont connus pour la journée qui suit. Ainsi, en se limitant au cas de l'erreur d'amplitude de poussée, dans la journée qui suit, lors de l'application du filtre de Kalman, on ajoutera à la neuvième ligne / neuvième colonne de la matrice de covariance $Q_k$ du modèle la valeur $(\Delta G_0)^2 = (g_1 \cdot g_2 \cdot \Delta t \cdot \cos(g_2 \cdot t_{k-1}+g_3))^2$.

En d'autres termes, le « rebouclage sur le passé » consiste à utiliser des pseudo-distances déterminées préalablement (par exemple, au cours d'une journée passée) ainsi que les estimations correspondantes du vecteur d'état, pour actualiser une matrice de covariance du modèle d'estimation. Cette matrice actualisée sera ensuite utilisée - par exemple au cours d'une journée suivante - pour la mise en oeuvre du filtrage de Kalman.

Quand une mesure GNSS est réalisée, les éléments suivants sont connus :

- Position du satellite GNSS (par ses éphémérides, nécessaires pour transformer la mesure de temps d'arrivée en pseudo-distance utile) ;
- Position du véhicule spatial (vecteur d'état de Kalman) ;
- Puissance du signal GNSS reçu, évaluée par des méthodes classiques de traitement GNSS.

Ces éléments peuvent avantageusement être utilisés pour estimer le gain du diagramme de rayonnement DG de l'antenne émettrice du satellite GNSS dans la direction satellite - véhicule spatial.

En effet, la connaissance de la position du satellite GNSS « SAT » et du véhicule spatial « VS » permet de déterminer un angle d'élévation de VS vu par SAT et de SAT vu par VS, ainsi que la distance SAT - VS. Cela permet à son tour de déterminer le bilan de liaison, seul le gain d'antenne du satellite GNSS étant inconnu. Ce dernier paramètre peut être déterminé à partir d'une mesure de la puissance du signal GNSS reçu.

L'estimation de ce gain d'antenne (référence « e » sur la figure 4) peut avantageusement être utilisée pour optimiser la stratégie de poursuite GNSS (référence « f »).

En effet, le récepteur GNSS embarqué connaît sa propre position (estimée par le filtre de Kalman), la position de la Terre et la position de tous les satellites GNSS. Il peut donc calculer pour chacun de ces satellites GNSS l'angle d'élévation correspondant et, à partir du diagramme d'antenne estimé de la manière décrite ci-dessus, décider si le satellite GNSS est utilisable ou non, et donc décider de réaliser une ré-acquisition et une mesure de pseudo-distance sur celui-ci ou non.

Avantageusement, la connaissance du modèle d'estimation et des paramètres d'état du vecteur $\xi$ peut être exploitée pour déterminer des corrections futures de l'orbite et/ou de la poussée dudit véhicule spatial. Par exemple :

- Connaissant la courbe efficace de poussée on saura répartir au mieux celle-ci sur le reste de la mise à poste, par exemple en limitant les poussées hors périgée.
- Connaissant le diagramme d'antenne précis de chaque satellite GNSS on saura choisir a priori les satellites GNSS suivis à chaque point de mesure de manière plus efficace, et on saura déterminer plus précisément la covariance de mesure associée.
- Connaissant la position courante du véhicule spatial, et en la comparant à la position attendue lors de la construction initiale du scénario, on saura quelle correction supplémentaire de trajectoire doit être apportée pour réajuster comme prévu l'orbite finale ; cela concerne en particulier l'inclinaison et la longitude nodale.

Cette étape de « optimisation sur le futur » est indiqué sur la figure 4 par la référence « g ».

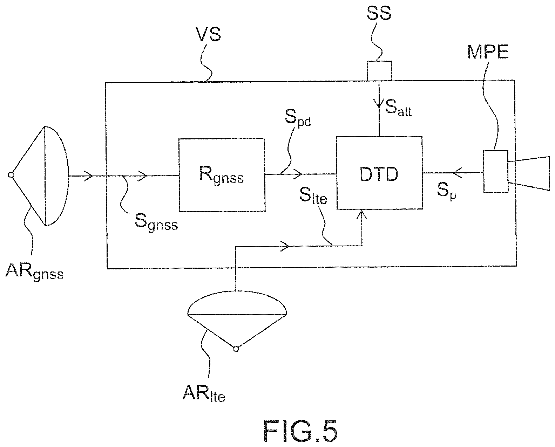

La figure 5 illustre un véhicule spatial VS portant un dispositif pour la mise en ouvre d'un procédé selon l'invention. Le véhicule spatial est équipé d'une première antenne $AR_{gnss}$ pour recevoir au moins un signal GNSS $s_{gnss}$ ainsi, d'une seconde antenne $AR_{lte}$ pour recevoir, à partir du sol, au moins un signal $s_{lte}$ représentatif des éphémérides de long terme des satellites GNSS et d'un senseur stellaire SS pour générer un signal $s_{att}$ représentatif de l'attitude du satellite. Dans d'autres modes de réalisation, une seule antenne peut acquérir les signaux GNSS et d'éphéméride de long terme et/ou d'autres moyens, tels que des roues de contrôle, peuvent être prévus pour l'estimation de l'attitude.

Le ou les signaux $s_{gnss}$ captés par l'antenne $AR_{gnss}$ sont fournis en entrée à un récepteur GNSS (référence $R_{gnss}$) qui, par un traitement conventionnel, détermine les pseudo-distances correspondantes (éventuellement ambiguës). Un dispositif de traitement des données DTD, typiquement un ordinateur de bord programmé de manière opportune, reçoit en entrée des signaux $s_{pd}$ générés par le récepteur $R_{gnss}$, le signal $s_{ltt}$, le signal $s_{att}$ ainsi qu'un signal $s_p$ représentatif d'une poussée générée par un moteur à propulsion électrique MPE. Le dispositif DTD utilise ces données d'entrée, ainsi qu'un modèle d'estimation ME, pour déterminer (entre autres) la position et la vitesse instantanées du véhicule spatial. Ces données peuvent être transmises à une station au sol, par exemple au moyen d'une antenne dédiée (non représentée) ou de l'antenne $AR_{lte}$.

L'invention a été décrite en référence à un mode de réalisation particulier, mais de nombreuses modifications sont envisageables. Par exemple, le filtre de Kalman peut être remplacé par un autre modèle d'estimation tel qu'un filtre de Kalman étendu, un algorithme génétique ou un moindre carré itératif.

## Revendications

1. Procédé de suivi d'une orbite de transfert (OVS) ou d'une phase de mise en orbite d'un véhicule spatial comportant les étapes suivantes :

   a) poursuivre au moins un signal GNSS ($s_{gnss}$) et l'utiliser pour déterminer au moins une pseudo-distance entre ledit véhicule spatial et un ou plusieurs satellites GNSS (SAT) émettant ledit ou chaque dit signal ;
   b) utiliser un modèle d'estimation (ME) pour estimer conjointement un ensemble ($\xi$) de paramètres d'état dudit véhicule spatial comprenant une pluralité de paramètres de position, une pluralité de paramètres de vitesse, au moins un paramètre d'horloge, et au moins un paramètre d'erreur de poussée caractérisant un écart entre une force de poussée réelle dudit véhicule spatial et une force de poussée nominale, en prenant ladite ou lesdites pseudo-distances en tant que donnée d'entrée dudit modèle d'estimation ;

   **caractérisé en ce que** ladite poussée est une poussée continue de type électrique.

2. Procédé selon l'une des revendications précédentes dans lequel ladite étape a) comprend la récupération par assistance depuis le sol du message de navigation du satellite GNSS ou de chaque message de navigation de chaque satellite GNSS.

3. Procédé selon la revendication 2 dans lequel ladite étape a) comprend la poursuite d'au moins un signal GNSS pilote, ne transportant pas de message de navigation, ladite poursuite étant réalisée par corrélation cohérente dudit ou de chaque dit signal GNSS pilote sur une durée supérieure à celle d'un symbole.

4. Procédé selon la revendication 2 dans lequel ladite étape a) comprend une opération d'effacement dudit ou de chaque dit message de navigation récupéré par assistance depuis le sol pour permettre ladite corrélation cohérente.

5. Procédé selon l'une des revendications précédentes dans lequel ledit ensemble de paramètres d'état comprend au moins un premier paramètre d'erreur de poussée caractérisant un écart entre une amplitude de ladite force de poussée réelle et de ladite force de poussée nominale, et un deuxième paramètre d'erreur de poussée caractérisant un écart entre une direction de ladite force de poussée réelle et de ladite force de poussée nominale.

6. Procédé selon la revendication 5 dans lequel ledit ensemble de paramètres d'état comprend au moins deux paramètres d'erreur de poussé caractérisant à la fois ledit écart entre une direction de ladite force de poussée réelle et de ladite force de poussée nominale, et une erreur d'estimation de l'attitude dudit véhicule spatial.

7. Procédé selon la revendication 6 comportant également l'étape suivante :

   c) appliquer, pendant une durée déterminée, une poussée nominalement dirigée selon une direction reliant ledit véhicule spatial à un satellite GNSS émettant un signal GNSS acquis lors de ladite étape a) ;

   moyennant quoi l'application dudit modèle d'estimation permet une amélioration de l'estimation desdits ou d'au moins un desdits paramètres d'erreur de poussée.

8. Procédé selon l'une des revendications précédentes dans lequel ledit ensemble de paramètres d'état comprend également au moins un paramètre d'erreur d'horloge, caractérisant un décalage ou une dérive d'une horloge d'un récepteur GNSS embarqué sur ledit véhicule spatial et utilisé pour mettre en oeuvre ladite étape a).

9. Procédé selon l'une des revendications précédentes dans lequel ledit modèle d'estimation est un filtre de Kalman ou un filtre de Kalman étendu **caractérisé par** une matrice ou fonction de transition dépendant du temps et de la position dudit véhicule spatial de façon à prendre en compte à la fois des forces gravitationnelles agissant sur ledit véhicule spatial et ladite force de poussée.

**10.** Procédé selon l'une des revendications précédentes comportant également l'étape suivante :

d) utiliser des pseudo-distances mesurées dans le passé, ainsi que les estimations correspondantes desdits paramètres d'état, pour actualiser une matrice de covariance dudit modèle d'estimation.

**11.** Procédé selon l'une des revendications précédentes comportant également les étapes suivante :

e) utiliser ledit ou au moins un dit signal GNSS acquis, une connaissance des éphémérides du satellite GNSS l'ayant émis et la position du véhicule spatial estimée au moyen dudit modèle d'estimation pour estimer un diagramme de rayonnement (DR) d'une antenne émettrice dudit satellite GNSS.

**12.** Procédé selon la revendication 11 comportant également l'étape suivante :

f) utiliser ladite ou au moins une dite estimation d'un diagramme de rayonnement lors de la mise en oeuvre de ladite étape a).

**13.** Procédé selon l'une des revendications précédentes comportant également l'étape suivante :

g) utiliser la connaissance dudit modèle d'estimation et desdits paramètres d'état pour déterminer des corrections futures de l'orbite et/ou de la poussée dudit véhicule spatial.

**14.** Appareil pour la mise en oeuvre d'un procédé selon l'une des revendications précédentes comprenant :

- un récepteur GNSS ($R_{gnss}$) configuré pour poursuivre au moins un signal GNSS ;
- un dispositif de traitement des données (DTD) recevant en entrée un signal GNSS poursuivi par ledit récepteur ;

ledit dispositif de traitement étant configuré ou programmé pour :

- utiliser ledit ou chaque dit signal GNSS acquis pour déterminer au moins une pseudo-distance entre ledit récepteur et un ou plusieurs satellites GNSS émettant ledit ou chaque dit signal ;
- appliquer un modèle d'estimation pour estimer conjointement un ensemble de paramètres d'état comprenant une pluralité de paramètres de position, une pluralité de paramètres de vitesse, au moins un paramètre d'horloge, et au moins un paramètre d'erreur de poussée continue de type électrique caractérisant un écart entre une force de poussée continue de type électrique réelle dudit véhicule spatial et une force de poussée continue nominale, en prenant ladite ou lesdites pseudo-distances en tant que donnée d'entrée dudit modèle d'estimation.

**Patentansprüche**

**1.** Verfahren zum Verfolgen einer Übergangsbahn (OVS) oder einer Phase des Bringens eines Raumfahrzeugs in eine Umlaufbahn, das die folgenden Schritte beinhaltet:

a) Verfolgen wenigstens eines GNSS-Signals ($S_{gnss}$) und Benutzen desselben zum Bestimmen wenigstens einer Pseudodistanz zwischen dem Raumfahrzeug und einem oder mehreren GNSS-Satelliten (SAT), die das oder jedes Signal senden;
b) Benutzen eines Schätzmodells (ME) zum gemeinsamen Schätzen eines Satzes ($\xi$) von Zustandsparametern des Raumfahrzeugs, umfassend mehrere Positionsparameter, mehrere Geschwindigkeitsparameter, wenigstens einen Zeitparameter und wenigstens einen Schubfehlerparameter, der einen Abstand zwischen einer reellen Schubkraft des Raumfahrzeugs und einer nominellen Schubkraft charakterisiert, wobei die ein oder mehreren Pseudodistanzen als Eintrittsdaten des Schätzmodells genommen werden;

**dadurch gekennzeichnet, dass** der Schub ein kontinuierlicher Schub des elektrischen Typs ist.

**2.** Verfahren nach dem vorherigen Anspruch, bei dem Schritt a) das Wiederherstellen, mit Assistenz vom Boden, der Navigationsnachricht des GNSS-Satelliten oder jeder Navigationsnachricht jedes GNSS-Satelliten beinhaltet.

**3.** Verfahren nach Anspruch 2, bei dem Schritt a) das Verfolgen von wenigstens einem GNSS-Pilotsignal beinhaltet, das keine Navigationsnachricht transportiert, wobei das Verfolgen durch kohärente Korrelation des oder jedes GNSS-Pilotsignals für eine Dauer realisiert wird, die länger ist als die eines Symbols.

4. Verfahren nach Anspruch 2, wobei Schritt a) eine Operation des Löschens der oder jeder mit Assistenz vom Boden wiederhergestellten Navigationsnachricht beinhaltet, um die kohärente Korrelation zuzulassen.

5. Verfahren nach einem der vorherigen Ansprüche, bei dem der Satz von Zustandsparametern wenigstens einen ersten Schubfehlerparameter, der einen Abstand zwischen einer Amplitude der reellen Schubkraft und der nominellen Schubkraft charakterisiert, und einen Schubfehlerparameter umfasst, der einen Abstand zwischen einer Richtung der reellen Schubkraft und der nominellen Schubkraft charakterisiert.

6. Verfahren nach Anspruch 5, bei dem der Satz von Zustandsparametern wenigstens zwei Schubfehlerparameter umfasst, die gleichzeitig den Abstand zwischen einer Richtung der reellen Schubkraft und der nominellen Schubkraft und einen Schätzfehler der Lage des Raumfahrzeugs charakterisieren.

7. Verfahren nach Anspruch 6, das auch den folgenden Schritt beinhaltet:

   c) Anwenden, für eine vorbestimmte Dauer, eines Schubs, der nominell in eine Richtung gerichtet ist, die das Raumfahrzeug mit einem GNSS-Satelliten verbindet, der ein in Schritt a) erfasstes GNSS-Signal sendet;

   mittels dessen das Anwenden des Schätzmodells eine Verbesserung der Schätzung der oder wenigstens eines der Schubfehlerparameter zulässt.

8. Verfahren nach einem der vorherigen Ansprüche, bei dem der Satz von Zustandsparametern auch wenigstens einen Zeitfehlerparameter umfasst, der eine Verschiebung oder eine Ableitung einer Zeit eines GNSS-Empfängers an Bord des Raumfahrzeugs charakterisiert, benutzt zum Ausführen von Schritt a).

9. Verfahren nach einem der vorherigen Ansprüche, bei dem das Schätzmodell ein Kalman-Filter oder ein erweitertes Kalman-Filter ist, **gekennzeichnet durch** eine Übergangsfunktionsmatrix in Abhängigkeit von der Zeit und der Position des Raumfahrzeugs, um gleichzeitig auf das Raumfahrzeug wirkende Schwerkräfte und die Schubkraft zu berücksichtigen.

10. Verfahren nach einem der vorherigen Ansprüche, das auch den folgenden Schritt beinhaltet:

    d) Benutzen der in der Vergangenheit gemessenen Pseudodistanzen sowie der Schätzungen entsprechend den Zustandsparametern zum Aktualisieren einer Kovarianzmatrix des Schätzmodells.

11. Verfahren nach einem der vorherigen Ansprüche, das auch die folgenden Schritte beinhaltet:

    e) Benutzen des oder wenigstens eines erfassten GNSS-Signals, einer Erkenntnis der Ephemeriden des GNSS-Satelliten, der es gesendet hat, und der geschätzten Position des Raumfahrzeugs mittels des Schätzmodells zum Schätzen eines Strahlungsdiagramms (DR) einer Sendeantenne des GNSS-Satelliten.

12. Verfahren nach Anspruch 11, das auch den folgenden Schritt beinhaltet:

    f) Benutzen der oder wenigstens einer Schätzung eines Strahlungsdiagramms während der Ausführung von Schritt a).

13. Verfahren nach einem der vorherigen Ansprüche, das auch den folgenden Schritt beinhaltet:

    g) Benutzen der Kenntnis des Schätzmodells und der Zustandsparameter zum Bestimmen von zukünftigen Korrekturen der Umlaufbahn und/oder des Schubs des Raumfahrzeugs.

14. Vorrichtung zum Durchführen eines Verfahrens nach einem der vorherigen Ansprüche, die Folgendes umfasst:

    - einen GNSS-Empfänger ($R_{gnss}$), konfiguriert zum Verfolgen von wenigstens einem GNSS-Signal;
    - eine Datenverarbeitungsvorrichtung (DTD), die am Eingang ein von dem Empfänger verfolgtes GNSS-Signal empfängt;

wobei die Verarbeitungsvorrichtung konfiguriert oder programmiert ist zum:

- Benutzen des oder jedes erfassten GNSS-Signals zum Bestimmen wenigstens einer Pseudodistanz zwischen dem Empfänger und einem oder mehreren das oder jedes Signal sendenden GNSS-Satelliten;
- Anwenden eines Schätzmodells zum gemeinsamen Schätzen eines Satzes von Zustandsparametern, umfassend mehrere Positionsparameter, mehrere Geschwindigkeitsparameter, wenigstens einen Zeitparameter und wenigstens einen kontinuierlichen Schubfehlerparameter des elektrischen Typs, der einen Abstand zwischen einer reellen kontinuierlichen Schubkraft des elektrischen Typs des Raumfahrzeugs und einer nominellen kontinuierlichen Schubkraft charakterisiert, wobei die ein oder mehreren Pseudodistanzen als Eingangsdaten in das Schätzmodell genommen werden.

**Claims**

1. Method of following a transfer orbit (OVS) or a phase of orbital placement of a space vehicle comprising the following steps:

   a) tracking at least one GNSS signal ($s_{gnss}$) and using it to determine at least one pseudorange between the space vehicle and one or more GNSS satellite(s) (SAT) transmitting the or each signal;
   b) using an estimation model (ME) to jointly estimate a set ($\xi$) of state parameters of the space vehicle comprising a plurality of position parameters, a plurality of velocity parameters, at least one clock parameter, and at least one thrust error parameter characterizing a discrepancy between an actual thrust force of the space vehicle and a nominal thrust force, by taking the pseudorange or pseudoranges as an input data item of the estimation model;

   **characterized in that** the thrust is a continuous thrust of the electric type.

2. Method according to the preceding claim, in which the step a) comprises the recovery by assistance from the ground of the navigation message of the GNSS satellite or of each navigation message of each GNSS satellite.

3. Method according to claim 2, in which the step a) comprises the tracking of at least one pilot GNSS signal, not transporting any navigation message, the tracking being carried out by coherent correlation of the or of each pilot GNSS signal over a duration greater than that of a symbol.

4. Method according to claim 2, in which the step a) comprises an operation of erasing the or each navigation message recovered by assistance from the ground so as to allow the coherent correlation.

5. Method according to any one of the preceding claims, in which the set of state parameters comprises at least one first thrust error parameter characterizing a discrepancy between an amplitude of the actual thrust force and of the nominal thrust force, and a second thrust error parameter characterizing a discrepancy between a direction of the actual thrust force and of the nominal thrust force.

6. Method according to claim 5, in which the set of state parameters comprises at least two thrust error parameters characterizing at the same time the discrepancy between a direction of the actual thrust force and of the nominal thrust force, and an error of estimation of the attitude of the space vehicle.

7. Method according to claim 6, also comprising the following step:

   c) applying, for a predetermined duration, a thrust nominally directed in a direction linking the space vehicle to a GNSS satellite transmitting a GNSS signal acquired during the step a);

   whereby the application of the estimation model allows an improvement in the estimation of the thrust error parameters or of at least one of the thrust error parameters.

8. Method according to any one of the preceding claims, in which the set of state parameters also comprises at least one clock error parameter, characterizing an offset or a drift of a clock of a GNSS receiver onboard the space vehicle and used to implement the step a).

9. Method according to any one of the preceding claims, in which the estimation model is a Kalman filter or an extended Kalman filter **characterized by** a transition matrix or function depending on time and on the position of the space vehicle so as to simultaneously take into account the gravitational forces acting on the space vehicle and the thrust force.

10. Method according to any one of the preceding claims, also comprising the following step:

d) using pseudoranges measured in the past, as well as the corresponding estimations of the state parameters, to update a covariance matrix of the estimation model.

11. Method according to any one of the preceding claims, also comprising the following step:

e) using the or at least one GNSS signal acquired, a knowledge of the ephemerides of the GNSS satellite which transmitted it and the space vehicle's position estimated by means of the estimation model to estimate a radiation pattern (DR) of a transmitting antenna of the GNSS satellite.

12. Method according to claim 11, also comprising the following step:

f) using the or at least one estimation of a radiation pattern during the implementation of the step a).

13. Method according to any one of the preceding claims, also comprising the following step:

g) using the knowledge of the estimation model and of the state parameters to determine future corrections of the orbit and/or of the thrust of the space vehicle.

14. Apparatus for the implementation of a method according to any one of the preceding claims, comprising:

- a GNSS receiver ($R_{gnss}$) configured to track at least one GNSS signal;
- a device for processing the data (DTD) receiving as input a GNSS signal tracked by the receiver;

the processing device being configured or programmed to:

- use the or each GNSS signal acquired to determine at least one pseudorange between the receiver and one or more GNSS satellites transmitting the or each signal;
- apply an estimation model to jointly estimate a set of state parameters comprising a plurality of position parameters, a plurality of velocity parameters, at least one clock parameter, and at least one continuous thrust error parameter of the electric type characterizing a discrepancy between an actual continuous thrust force of the electric type of the space vehicle and a nominal continuous thrust force, by taking the pseudorange or pseudoranges as an input data item of the estimation model.

FIG.1

FIG.2

FIG.3

FIG.4

FIG.5

## RÉFÉRENCES CITÉES DANS LA DESCRIPTION

**Documents brevets cités dans la description**

- US 20110254734 A1
- US 6882908 B2